(19) Europäisches Patentamt
European Patent Office
Office européen des brevets

(11) **EP 1 772 226 A1**

(12) **DEMANDE DE BREVET EUROPEEN**

(43) Date de publication:
**11.04.2007 Bulletin 2007/15**

(51) Int Cl.:
***B23K 35/30*** *(2006.01)*

(21) Numéro de dépôt: **06301003.7**

(22) Date de dépôt: **02.10.2006**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **05.10.2005 FR 0553019**

(71) Demandeurs:
• **L'AIR LIQUIDE S.A.**
 **75321 Paris Cédex 07 (FR)**
• **AIR LIQUIDE WELDING FRANCE**
 **75007 Paris (FR)**

(72) Inventeurs:
• **Bonnet, Christian**
 **95650 Puiseux-Pontoise (FR)**
• **Richard, Frédéric**
 **78300 Poissy (FR)**
• **Leduey, Bruno**
 **95000 Cergy (FR)**

(74) Mandataire: **Pittis, Olivier**
 **L'Air Liquide, S.A.**
 **Direction de la Propriété Intellectuelle**
 **75, Quai d'Orsay**
 **75007 Paris (FR)**

(54) **Fil de soudage à basse teneur en calcium**

(57) L'invention concerne un fil fusible pour le soudage à l'arc électrique contenant du fer et du calcium, caractérisé en ce que la teneur totale en calcium dudit fil est inférieure à 19 ppm en poids par rapport au poids dudit fil. Selon l'invention, le fil est de type rutile, massif ou " sans laitier ". Procédé de soudage à l'arc avec protection gazeuse utilisant un tel fil et joint de soudure ainsi obtenu.

FIG.2

EP 1 772 226 A1

**Description**

La présente invention se rapporte à un fil plein ou fourré pauvre en calcium pour le soudage à l'arc électrique, à un procédé de soudage à l'arc électrique utilisant un tel fil, à une soudure obtenue avec un tel fil et au procédé de fabrication d'un tel fil.

En soudage à l'arc électrique avec protection gazeuse, appelé GMAW (Gas Metal Arc Welding), qui englobe notamment les procédés de soudage MIG (Metal Inert Gas) et MAG (Metal Active Gas), on utilise classiquement deux catégories de fils fusibles destinés à apporter des éléments d'apport à la soudure en cours de réalisation, c'est-à-dire au métal déposé.

Ces deux catégories de fils fusibles sont, d'une part, les fils dits « massifs » et, d'autre part, les fils dits 'fourrés'.

Ces fils se distinguent par leur structure puisque les fils « massifs » se présentent sous forme d'un fil métallique ne contenant pas de fourrage en son centre, alors que les fils fourrés sont habituellement constitués d'une (ou plusieurs) enveloppe métallique externe tubulaire et d'une âme centrale comprenant des éléments de remplissage, par exemple une poudre métallique et/ou un flux comportant un ou plusieurs minéraux oxyde métallique, tel le $TiO_2$; ces éléments constituant le fourrage du fil.

Les fils fourrés sont utilisés dans de nombreuses procédures de soudage avec protection gazeuse, notamment dans le soudage des aciers de construction normalisés, TMCP ou trempé-revenu, car ils permettent d'obtenir, dans la zone fondue du joint soudé, d'excellentes propriétés de ténacité à basse température, c'est-à-dire à des températures inférieures à 0°C et pouvant même atteindre -50 °C, voire -60°C, et ce, tant à l'état brut de soudage qu'après un traitement thermique de détensionnement subséquent. Il existe trois types de fils fourrés utilisable en soudage, à savoir "basique", "rutile" et "sans laitier".

De façon générale, les différents types ou catégories de fils se différencient aussi par la nature des éléments qui les constituent.

Les éléments principaux constituants les fils massifs ou fourrés sont donnés par les normes AWS 5-25, 5-21 ou autres normes équivalentes.

Ainsi, parmi les constituants des fils utilisables pour souder les aciers faiblement alliés, on peut citer en tant que :

- éléments principaux : C, Mn, Si...
- éléments d'impuretés : S, P...
- éléments d'alliages : Cr, Ni, Mo, Cu...

Selon le type de fil fourré ou massifs utilisé dans le procédé de soudage, on obtient une fusion plus ou moins douce dudit fil, un arc plus ou moins stable, un soudage en position plus ou moins facile, plus ou moins de projection, un métal déposé, une soudure formée de métal déposé et de métal de base en proportion du taux de dilution, ayant des propriétés métallurgiques très variables en fonction notamment de la nature du fil et de la teneur des différents éléments qui le constituent.

Un problème constant en soudage à l'arc est d'améliorer la soudabilité opératoire des aciers carbone-manganèse (C-Mn) et des aciers faiblement alliés, c'est-à-dire contenant des éléments d'alliage en une teneur inférieure ou égale à 5% par rapport au poids de l'acier.

La soudabilité opératoire s'apprécie au travers de la stabilité d'arc et particulièrement du taux de projections, c'est-à-dire de la quantité ou proportion de particules ou gouttelettes de métal fondu projetées en-dehors du bain de soudage, c'est-à-dire hors de la soudure en cours de réalisation obtenue notamment par fusion d'un (ou plusieurs) fil fusible de soudage.

Or, le mode de transfert de métal depuis le fil fusible jusqu'au bain liquide dépend notamment de l'intensité et de la tension du courant de soudage, ainsi que, dans le cas d'un soudage avec gaz de protection, de la composition de l'atmosphère gazeuse mise en oeuvre.

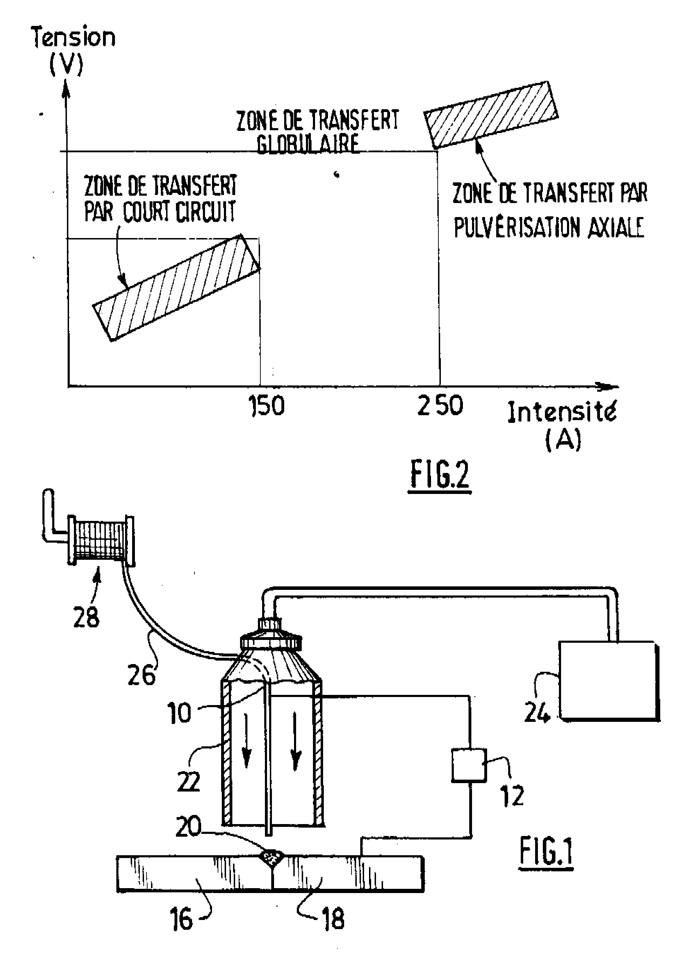

Comme schématisé sur la Figure 2 ci-annexée, avec les mélanges à base d'argon additionné de $CO_2$ et/ou d'oxygène, le mode de transfert du métal se fait, par exemple pour un fil de 1.2 mm de diamètre :

- par court-circuit lorsque l'intensité du courant est faible, c'est-à-dire pour les intensités inférieures ou égales à 150 A,
- par pulvérisation axiale (spray) lorsque l'intensité du courant est forte, c'est-à-dire pour les intensités minimales de 250 A à 300 A, voire même supérieures selon la nature du mélange gazeux utilisé afin de protéger les gouttes de métal d'une réaction avec l'oxygène et l'azote de l'air,
- de façon dite "globulaire" pour les intensités dites intermédiaires allant de 150 A à l'intensité minimale provoquant le transfert par pulvérisation axiale.

Cependant, il existe une tension minimale (en Volts) en deçà de laquelle un transfert, en régime de pulvérisation axiale, ne peut pas se faire même si l'intensité appliquée le permet en théorie, c'est-à-dire même si l'intensité est

EP 1 772 226 A1

supérieure au seuil indiqué précédemment.

Il est connu que cette tension minimale du courant est fonction de la teneur en $CO_2$ et/ou en oxygène du gaz de protection utilisé et/ou du fil choisi pour réaliser le soudage.

Dès lors, pour tenter de résoudre ce problème, on pourrait envisager, en théorie, de simplement choisir un gaz de protection adéquat et un fil de soudage, puis d'augmenter la tension du courant jusqu'à obtenir une valeur de tension minimale permettant d'atteindre le régime de soudage souhaité, à savoir le régime de pulvérisation axiale.

Or, en pratique, augmenter la tension du courant de soudage pour obtenir la tension minimale permettant d'atteindre un régime de soudage souhaité, en particulier le régime par pulvérisation axiale, n'est pas anodin et peut avoir, en pratique, des conséquences négatives sur la soudabilité.

En effet, plus on augmente la tension du courant, plus la longueur de l'arc augmente, c'est-à-dire la taille de l'arc électrique se formant entre le fil électrode et le joint de soudure, ce qui conduit à un arc peu rigide donc "baladeur" et difficilement contrôlable par le soudeur et, par là même, une qualité de soudure détériorée et irrégulière.

A l'inverse, si on tente de conserver ou de maintenir une hauteur d'arc acceptable, alors il se produit une augmentation du taux de projections de gouttelettes de métal fondu car le transfert se fait alors en mode globulaire sous une forte intensité et non pas selon le régime par pulvérisation axiale désiré.

De façon générale, on peut dire que la tension du courant de soudage influence la hauteur d'arc et donc la manière dont le soudeur va pouvoir positionner son arc à l'endroit où il souhaite effectuer la soudure, c'est-à-dire la maniabilité de l'arc, alors que l'intensité du courant influence la vitesse du fil donc la productivité, c'est-à-dire le taux de dépôt de métal par unité de temps.

Il s'ensuit que le but de la présente invention est alors de résoudre les problèmes ci-dessus se posant avec les fils de soudage connus et de proposer un fil de soudage pouvant conduire, lors de sa mise en oeuvre et sa fusion dans un procédé de soudage à l'arc, à simultanément une faible hauteur d'arc et peu de projections en comparaison avec un fil classique mis en en oeuvre dans les mêmes conditions opératoires, c'est-à-dire pour un même réglage d'intensité et de tension.

En d'autres termes, le problème qui se pose est de proposer un fil de soudage dont l'utilisation en procédé de soudage à l'arc conduise à la formation d'un arc rigide et maniable par l'opérateur, et un taux de projections nettement plus faible qu'un fil classique, c'est-à-dire environ 10 fois inférieur.

La solution de l'invention repose sur un fil fusible, plein ou fourré, pour le soudage à l'arc électrique contenant du fer et du calcium, caractérisé en ce que la teneur totale en calcium dudit fil est inférieure à 19 ppm en poids par rapport au poids dudit fil, ledit fil contenant en outre de 1 ppm à 1000 ppm de titane et moins de 300 ppm d'aluminium.

Selon le cas, le fil de l'invention peut comprendre l'une ou plusieurs des caractéristiques suivantes :

- la teneur en calcium est inférieure à 18 ppm, de préférence inférieure à 17 ppm.
- la teneur en calcium est inférieure à 15 ppm.
- la teneur en titane est comprise entre 10 et 500 ppm, de préférence entre 20 et 300 ppm, par rapport au poids du fil.
- l'aluminium en une teneur inférieure à 250 ppm en poids, de préférence entre 10 ppm et 200 ppm, de préférence encore inférieure à 150 ppm, avantageusement entre 20 et 100 ppm.
- il est un fil fourré comprenant une enveloppe métallique externe en acier ferritique et une âme centrale comprenant des éléments de remplissage, l'enveloppe externe représentant au moins 50 % du poids total du fil fourré, de préférence de 65 à 95% du poids total du fil fourré.
- il est choisi parmi les fils de type "rutile", de type massif ou de type "sans laitier" (Metal Cored).
- il comporte, en outre, de l'aluminium en une teneur inférieure à 0,3% en poids. Plus précisément, lorsque le fil est un fil rutile ($TiO_2$) la proportion en Al peut atteindre 0,3% en poids. Par contre, lorsque le fil est un fil massif, elle est préférablement inférieure ou égale à 0,04 %. De même, pour un fil « sans laitier », elle est, de préférence, inférieure ou égale à 0,1 %.
- il est un fil massif comportant :

  • de 1 ppm à 140 ppm en poids d'azote, de préférence inférieure ou égal à 100 ppm,
  • de 1 ppm à 110 ppm en poids de bore,
  • de 10 ppm à 300 ppm en poids d'oxygène, et/ou
  • de 0.2% à 1.2% en poids de silicium, de préférence entre 0.3 et 0.9% de silicium.

- il est un fil fourré comportant, en outre, moins de 100 ppm en poids d'azote, de 1 ppm à 110 ppm en poids de bore et/ou de 0.2% à 1.2% en poids de silicium, de préférence entre 0.3 et 0.9% de silicium.
- il est cuivré en surface ou non cuivré, selon le cas.

L'invention porte aussi sur un procédé de soudage à l'arc avec protection gazeuse, dans lequel on opère une fusion d'au moins une partie d'un fil de soudage selon l'invention de manière à réaliser un joint de soudure sur une ou plusieurs pièces à souder.

Selon le cas, le procédé de l'invention peut comprendre l'une ou plusieurs des caractéristiques suivantes :

- il est choisi dans le groupe formé par les procédés MIG ou MAG ou de soudage hybride laser/MIG ou laser/MAG.
- le transfert de métal depuis le fil vers le joint de soudure s'opère en mode de pulvérisation axiale, à une intensité de 180 A à 350 A et sous une tension de 24 V à 35V.
- la fusion du fil s'effectue sous protection gazeuse, ladite protection gazeuse étant obtenue avec un mélange gazeux contenant de l'argon et au moins un composé gazeux additif choisi parmi le $CO_2$, l'oxygène et leurs mélanges, de préférence un mélange gazeux constitué de 2 à 20 % en vol. de $CO_2$ et d'argon pour le reste, de 0.5 à 5 % en vol. de d'oxygène et d'argon pour le reste, ou de 1 à 5% en vol. de $CO_2$, de 0.5% à 3% en vol. de $O_2$ et d'argon pour le reste.

Selon un autre aspect, l'invention porte aussi sur un joint de soudure ou du métal déposé susceptible d'être obtenu par un procédé de soudage selon l'invention et/ou par fusion d'un fil selon l'invention, ledit métal déposé contenant du fer et du calcium en une teneur inférieure à 15 ppm, de préférence inférieure à 10 ppm, par rapport au poids de la soudure et contenant, en outre, du titane en une teneur inférieure à 500 ppm et de l'aluminium en une teneur inférieure à 200 ppm.

Selon le cas, le métal déposé (joint) de l'invention peut comprendre l'une ou plusieurs des caractéristiques suivantes :

- il comprend :

  - > 90 % de Fe,

  - de 5 à 150 ppm de Al,

  - 0.01 à 0.12 % de C,

  - 0.7 à 2 % de Mn,

  - 0.15 à 0.9 % de Si, de préférence de 0.3 à 0.85% de Si, de préférence encore moins de 0.70% de Si,

  - de 10 à 300 ppm de Ti, de préférence plus de 15 ppm de Ti,

  - < 80 ppm de N,

  - 1 à 80 ppm de B, et/ou

  - 0.02 à 0.08% de O.

- il comprend, en outre, un ou plusieurs éléments d'alliage choisis parmi Ni, Cr et Mo.

L'invention porte également sur une pièce métallique comprenant du métal déposé selon l'invention.

En effet, aucun document de l'art antérieur n'avait, jusque là, souligné l'importance du contrôle de cette teneur en calcium dans les fils de soudage.

Le calcium considéré dans le cadre de la présente invention est celui présent dans le métal du fil massif et/ou dans le feuillard ou tube qui compose l'enveloppe du fil fourré, il peut être sous forme d'inclusions d'oxydes car le calcium est un désoxydant puissant qui peut être ajouté à cette fin lors de l'élaboration de l'acier et, s'il est utilisé pour cela, tous les oxydes formés dans l'acier liquide ne pourront pas décanter si bien qu'il en restera un peu dans le métal sous forme d'inclusions. D'autre part, les lubrifiants de tréfilage comme les stéarates de calcium subsistent en surface du fil, s'incrustent dans les rugosités de l'acier, jusqu'au diamètre final et laissent des résidus de calcium. En outre, le calcium est également présent sous forme d'impuretés dans les poudres métalliques qui composent le fourrage du fil fourré comme la poudre de fer ou les ferro-alliages.

Dans le cas d'un fil fourré, la teneur totale en calcium du fil fourré est égale à la somme des teneurs en calcium des différents constituants du fil fourré, à savoir, d'une part, de l'enveloppe et, d'autre part, des différents éléments de remplissage ou fourrage, et peut être représentée par la formule suivante:

$$[Ca]_T = (1 - t) \times [Ca]_e + \sum_{i=1}^{i=n} [Ca]_i \times [_i] \times t$$

- [Ca]$_T$ = teneur totale en calcium du fil (% en poids)

- t = taux de remplissage du fil fourré

$$= \frac{\text{Poids des éléments de remplissage}}{\text{Poids des éléments de remplissage + poids de l'enveloppe}}$$

- [Ca]e = teneur en calcium de l'enveloppe du fil (% en poids)
- [i] = teneur en produit i (% en poids)
- n = nombre de produits élémentaires i constituants les éléments de remplissage.
- [Ca]$_i$ teneur en calcium de l'élément i

En d'autres termes, plus généralement, par teneur en calcium, on entend la totalité du calcium (exprimé en % en poids par rapport au poids total du fil ou du morceau de fil considéré) contenu dans le fil, que ce calcium provienne du métal constitutif du fil, qu'il soit massif ou fourré (enveloppe et/ou fourrage), qu'il soit sans laitier (en anglais *Metal Cored)* ou avec flux, ou encore tout calcium résiduel pouvant se trouver à la surface du fil et résultant du procédé de fabrication du fil, notamment des opérations de tréfilage de celui-ci qui sont susceptibles de mettre en oeuvre des lubrifiants à base calcium, tels des savons calciques.

En effet, il est apparu aux inventeurs de la présente invention que, de façon étonnante, la teneur en calcium d'un fil de soudage, qu'il soit plein ou fourré, a un impact très important sur la formation d'un arc rigide et maniable, et sur le taux de projections obtenus lors de la fusion du fil.

Après avoir réalisé des investigations poussées, les inventeurs de l'invention ont mis en évidence que la présence en quantité élevée de calcium dans ou à la surface du fil a un effet négatif sur les caractéristiques et/ou le mode de transfert du métal fondu depuis le fil vers le bain de métal en fusion.

En effet, comme expliqué dans les exemples ci-après, pour des teneurs en calcium d'un fil massif de 50 ppm à 60 ppm en poids par rapport au poids total du fil, de mauvais résultats sont obtenus, en termes de soudabilité, alors que pour des teneurs en calcium inférieures à 19 ppm, de préférence inférieures à 15 ppm, de bons résultats ont été obtenus.

Dans les exemples ci-après, la teneur en calcium du fil est déterminée par toute technique adéquate connue, par exemple par ICP (plasma couplé inductif), par absorption atomique ou par fluorescence X. On notera, cependant, que lors des analyses, il conviendra de prendre un maximum de précautions pour éviter de contaminer le fil avec du calcium provenant d'ailleurs, de façon à ne pas fausser les mesures.

Afin de garantir une teneur en calcium du fil conforme à l'invention, on produit préférentiellement le fil à partir de matières premières dépourvues au maximum ou pauvres en calcium, en particulier de l'acier constitutif du fil massif ou de l'enveloppe du fil fourré, ainsi que des éléments constitutifs du fourrage du fil fourré.

En fait, plus la teneur en calcium est basse, plus on obtient facilement un régime de pulvérisation axiale pour des tensions faibles, ce qui permet à l'opérateur de régler la tension en fonction de son besoin sans avoir à prendre en compte l'aspect projections qui est réduit au minimum.

Lors de la mise en oeuvre du procédé de soudage de l'invention, la protection gazeuse est obtenue avec un mélange gazeux à base d'argon contenant des teneurs volumiques variables en $CO_2$, tels les mélanges gazeux ATAL 5 (Ar + 18% en volume de $CO_2$) ou ARCAL 21 (Ar + 8% $CO_2$), ou en oxygène, tels les mélanges gazeux CARGAL 1 (Ar + 1.5% $O_2$) ou CARGAL 2 (Ar + 3.5% $O_2$), ou des mélanges ternaires de ces composés, tel le mélange de gaz ARCAL 14 (Ar + 3% $CO_2$ + 1 à 1.5% de $O_2$) qui sont commercialisés par la société L'AIR LIQUIDE.

La présente invention va maintenant être décrite plus en détail, à l'aide d'exemples illustratifs mais non limitatifs.

La figure 1 est une vue schématique générale d'un exemple possible d'installation de soudage sous flux gazeux de protection conforme à l'invention, laquelle comporte un fil fusible 10 faisant office d'électrode relié à une source de courant 12 appropriée pour provoquer l'émission d'un arc électrique entre l'extrémité libre du fil fusible 10 et la zone de jonction entre des pièces à souder 16 et 18, c'est-à-dire le plan de joint de soudure à souder. Le fil 10 est disposé dans une buse 22 où circule un gaz de protection compatible avec le procédé de soudage considéré, provenant d'une source de gaz 24 servant à isoler le fil 10 et le bain 20 de métal déposé de l'atmosphère ambiante. Le fil fourré ou massif est amené sous la forme d'un fil continu alimenté à partir d'une bobine d'alimentation 28. Conformément à l'invention, le fil 10, qu'il soit fourré ou qu'il soit massif, a une teneur totale en calcium inférieure à 30 ppm. En outre, le fil a habituellement un diamètre compris généralement entre 1 et 2,4 mm, de préférence entre 1,2 et 1,6 mm.

Lors de la mise en oeuvre du procédé, les conditions de soudage suivantes peuvent être appliquées pour un fil de diamètre 1.2 mm, par exemple une intensité de soudage de 220 A (ou à l'intensité minimale provoquant le transfert par pulvérisation axiale) à 350 A, une tension de soudage de 18 à 35 volts, une vitesse d'avance du fil de 5 à 15 m/min et une vitesse de soudage de 15 à 300 cm/min.

Il est possible d'utiliser un fil fourré dont l'âme centrale comporte, en outre, un élément pour favoriser le détachement du laitier, tel que du soufre, et/ou un ou plusieurs ferro-alliages approprié pour augmenter la résilience de la soudure, tel qu'un ferro-manganèse, un ferro-silicium, du ferro-bore...

Exemples

Les essais ci-après ont été réalisés sur des pièces-tests ou éprouvettes de sorte de réaliser des dépôts de métal fondu en opérant une fusion de plusieurs fils fusibles ayant des compositions et teneurs différentes, en particulier en calcium, et comparaison ensuite des résultats obtenus.

Les essais de soudage ont été effectués sur un acier de type S235JR selon la norme EN 10025 et ayant par exemple la composition chimique donnée (% en poids) dans le Tableau I suivant.

Tableau I

| % | C | Si | Mn | S | P | Ni | Al | Ca ppm |
|---|---|---|---|---|---|---|---|---|
| Tôle | 0.14 | 0.21 | 0.73 | 0.005 | 0.009 | 0.031 | 0.042 | 10 |

Les essais ont été réalisés avec des fils massifs ou solides de diamètre 1.2 mm en utilisant une torche de soudage à tube de contact coudé ayant une partie terminale de 20 mm pour distribuer le fil, sous un mélange gazeux ATAL™ 5 (Ar + 18% vol. $CO_2$), à une intensité de 280 A et sous une tension de 30 à 32 V.

Les compositions des fils F1 à F5 et les résultats obtenus sont consignés dans le tableau II suivant.

Tableau II

| Teneur (en % sauf indication autre) | Fil n° | | | | |
|---|---|---|---|---|---|
| | F1 | F2 | F3 | F4 | F5 |
| C | 0.053 | 0.065 | 0.074 | 0.063 | 0.076 |
| Si | 0.59 | 0.62 | 0.59 | 0.61 | 0.60 |
| Mn | 1.04 | 1.05 | 1.07 | 1.10 | 1.07 |
| S | 0.014 | 0.014 | 0.011 | 0.014 | 0.016 |
| P | 0.020 | 0.015 | 0.007 | 0.012 | 0.009 |
| As | 0.017 | 0.019 | 0.014 | 0.018 | 0.016 |
| Ni | 0.069 | 0.076 | 0.057 | 0.074 | 0.065 |
| Cr | 0.081 | 0.092 | 0.040 | 0.073 | 0.061 |
| Mo | 0.020 | 0.021 | 0.016 | 0.025 | 0.018 |
| Cu | 0.097 | 0.083 | 0.087 | 0.095 | 0.082 |
| Ti | 0.023 | 0.024 | 0.023 | 0.027 | 0.022 |
| V | 0.003 | 0.003 | 0.003 | 0.003 | 0.003 |
| Sn | 0.009 | 0.008 | 0.008 | 0.010 | 0.006 |
| $O_2$ (ppm) | 81 | 100 | 73 | 60 | 62 |
| $N_2$ (ppm) | 89 | 78 | 97 | 97 | 108 |
| Teneur en calcium (en ppm) | 39 | 44 | 15 | 52 | 40 |
| Teneur en aluminium (en %) | 0.011 | 0.013 | 0.010 | 0.012 | 0.013 |

(suite)

| Teneur (en % sauf indication autre) | Fil n° | | | | |
|---|---|---|---|---|---|
| | F1 | F2 | F3 | F4 | F5 |
| Résultats | AI / TPE | AI / TPE | AS / TPF | AI / TPE | AI / TPE |
| AI : Arc instable<br>AS : Arc Stable<br>TPE : taux de projections élevé<br>TPF : taux de projections faible | | | | | |

Les résultats obtenus avec les fils F1 à F5 montrent que seul le fil F3 ayant une teneur en calcium inférieure à 19 ppm par rapport au poids du fil conduit à un arc stable et à un taux de projection faible lors de sa fusion.

A noter que le calcium est dans ce cas sous forme d'inclusions d'oxydes.

Afin de vérifier ces observations, d'autres fils dont les teneurs en calcium, en aluminium et en oxygène sont données dans le tableau III ci-après ont été testés. Dans ces essais, le calcium est sous forme de résidus des savons de tréfilage en surface des fils

Les tests ont été effectués en utilisant une torche de soudage à tube de contact coudé ayant une partie terminale de 20 mm pour distribuer le fil, sous le mélange gazeux ATAL 5, à une intensité de 260 à 320 A et sous une tension de 26 à 35 V.

Les résultats obtenus sont aussi consignés dans le tableau III.

Tableau III

| Fil n° | F6 | F7 |
|---|---|---|
| Teneur en calcium (en ppm) | 52 à 60 | 13 |
| Teneur en oxygène (en ppm) | 110 à 130 | 112 |
| Teneur en aluminium (en ppm) | 0.008 | 0.003 |
| Résultats | AI / TPE | AS / TPF |

Ces résultats confirment l'influence néfaste du calcium, c'est-à-dire que pour une teneur en calcium inférieure à 19 ppm (fil F7), on obtient un arc très doux ayant une longueur d'arc moindre, et peu de projections (dès 31 V à 280 A) par rapport à un fil similaire mais contenant davantage de calcium et ce, dans les mêmes conditions opératoires.

On remarque que, dans les deux essais, la teneur en aluminium a été maintenue inférieure à 300 ppm, en particulier inférieure à 100 ppm, car cet élément permet de piéger l'oxygène et l'azote susceptible de se retrouver dans le joint de soudure. Cependant, s'il est indispensable que cet élément soit présent dans le fil, il convient de limiter la quantité d'aluminium à moins de 300 ppm car sa présence excessive peut engendrer une dégradation des caractéristiques de ténacité et/ou résilience du joint soudé, c'est-à-dire du métal déposé.

Des essais complémentaires réalisés sur les mêmes fils mais en plus cuivrés en surface ont donné des résultats similaires.

Ceci est intéressant étant donné que le cuivrage surfacique des fils permet de leur conférer une meilleure résistance à la corrosion et d'améliorer la stabilité d'arc. De ce fait, dans le cadre de la présente invention, il est particulièrement avantageux de réaliser des fils cuivrés à basse teneur en calcium car, comme susmentionné, la présence de cuivre ne détériore pas les performances des fils et on préférera alors allier basse teneur en calcium et cuivrage du fil.

Afin de confirmer les résultats ci-dessus, d'autres fils ayant les compositions plus détaillées données dans le tableau IV ci-après ont été testés.

Tableau IV

| Teneur (en % sauf indication autre) | Fils n° | | |
|---|---|---|---|
| | F8 | F9 | F10 |
| C | 0.077 | 0.067 | 0.074 |
| Si | 0.55 | 0.59 | 0.64 |
| Mn | 1.08 | 1.02 | 1.09 |

(suite)

| Teneur (en % sauf indication autre) | Fils n° | | |
|---|---|---|---|
| | F8 | F9 | F10 |
| S | 0.013 | 0.013 | 0.010 |
| P | 0.011 | 0.007 | 0.006 |
| As | 0.007 | <0.001 | 0.024 |
| Ni | 0.021 | 0.042 | 0.062 |
| Cr | 0.023 | 0.020 | 0.044 |
| Mo | 0.008 | 0.004 | 0.012 |
| Cu | 0.018 | 0.120 | 0.086 |
| Al | 0.012 | 0.007 | 0.009 |
| Ti | 0.007 | 0.007 | 0.019 |
| V | 0.003 | 0.013 | 0.007 |
| Sn | 0.001 | 0.002 | 0.009 |
| $O_{2\,(ppm)}$ | 158 | 129 | 106 |
| $N_{2\,(ppm)}$ | 71 | 46 | 69 |
| Ca (ppm) | 4 | 10 | 32 |

Les résultats obtenus montrent qu'avec les fils F8 et F9, l'arc est doux et le taux de projections faible pour une intensité de 280A et à partir de 30.5 V, alors qu'il faut augmenter la tension à 32 V avec le fil F10 qui contient davantage de calcium ; toutefois, avec le fil F10, le taux de projections reste malgré tout assez faible.

En d'autres termes, ces résultats additionnés à ceux du tableau III confirment que pour une intensité donnée, la tension minimale permettant d'obtenir un arc doux et peu de projections est une fonction croissante de la teneur en calcium dans le fil.

De même, le taux de projections et la longueur d'arc augmentent avec la teneur en calcium dans le fil.

Ainsi, le fil F6 du tableau III conduit à un arc d'une longueur de 8 mm environ, ce qui est inacceptable pour un opérateur de soudage car engendrant un arc baladeur, c'est-à-dire un arc difficile à maîtriser et à contrôler.

Il s'ensuit qu'il convient de limiter la teneur totale en calcium à une valeur inférieure à 19 ppm, de préférence inférieure ou égale à 15 ppm, si l'on veut obtenir un arc stable et pas ou peu de projections.

En outre, il faut également limiter la teneur en titane à moins de 1000 ppm, de préférence moins de 500 ppm, car si cet élément a un effet bénéfique sur la stabilité d'arc et donc le taux de projections, sa présence excessive est néfaste puisque, comme pour l'aluminium, elle impacte négativement la résilicence/ténacité.

Dans le cadre de l'invention, on associe donc basse teneur en calcium et teneurs contrôlées en titane et aluminium.

De façon générale, le fil de l'invention est particulièrement adapté au soudage selon un procédé MAG des structures off-shore, des structures pétrolières, et plus généralement à la construction d'éléments métalliques.

**Revendications**

1.  - Fil fusible pour le soudage à l'arc électrique contenant du fer et du calcium, **caractérisé en ce que** la teneur totale en calcium dudit fil est inférieure à 19 ppm en poids par rapport au poids dudit fil, ledit fil contenant en outre de 1 ppm à 1000 ppm de titane et moins de 300 ppm d'aluminium.

2.  - Fil selon la revendication 1, **caractérisé en ce que** la teneur en calcium est inférieure à 18 ppm, de préférence inférieure à 17 ppm, de préférence encore inférieure à 15 ppm.

3.  - Fil selon l'une des revendications 1 ou 2, **caractérisé en ce que** la teneur en titane est comprise entre 10 et 500 ppm, de préférence entre 20 et 300 ppm, par rapport au poids du fil.

**4.** - Fil selon l'une des revendications 1 à 3, **caractérisé en ce qu'**il est un fil fourré comprenant une enveloppe métallique externe en acier ferritique et une âme centrale comprenant des éléments de remplissage, l'enveloppe externe représentant au moins 50 % du poids total du fil fourré, de préférence de 65 à 95% du poids total du fil fourré.

**5.** - Fil selon l'une des revendications 1 à 4, **caractérisé en ce qu'**il est choisi parmi les fils de type "rutile", massif ou "sans laitier".

**6.** - Fil selon l'une des revendications 1 à 5, **caractérisé en ce qu'**il comporte, en outre, de l'aluminium en une teneur inférieure à 250 ppm en poids, de préférence entre 10 ppm et 200 ppm, de préférence encore inférieure à 150 ppm, avantageusement entre 20 et 100 ppm.

**7.** - Fil selon l'une des revendications 1 à 3 ou 6, **caractérisé en ce qu'**il est un fil massif comportant :

 . de 1 ppm à 140ppm en poids d'azote, de préférence moins de 100 ppm en poids d'azote,
 . de 1 ppm à 110 ppm en poids de bore,
 . de 10 ppm à 300 ppm en poids d'oxygène, et/ou
 . de 0.2% à 1.2% en poids de silicium, de préférence entre 0.3 et 0.9% de silicium.

**8.** - Fil selon l'une des revendications 1 à 5, **caractérisé en ce qu'**il est un fil fourré comportant :

 . < 100 ppm en poids d'azote,
 . de 1 à 110 ppm en poids de bore, et/ou
 . de 0.2% à 1.2% en poids de silicium, de préférence entre 0.3 et 0.9% de silicium.

**9.** - Fil selon l'une des revendications 1 à 8, **caractérisé en ce qu'**il est cuivré en surface.

**10.** - Procédé de soudage à l'arc avec protection gazeuse, dans lequel on opère une fusion d'au moins une partie d'un fil de soudage selon l'une des revendications 1 à 9 de manière à réaliser un joint de soudure sur une ou plusieurs pièces à souder.

**11.** - Métal déposé ou joint de soudure susceptible d'être obtenu par un procédé de soudage selon la revendication 10 et/ou par fusion d'un fil selon l'une des revendications 1 à 9, ledit métal déposé contenant du fer et du calcium en une teneur inférieure à 15 ppm, de préférence inférieure à 10 ppm, par rapport au poids de la soudure et contenant, en outre, du titane en une teneur inférieure à 500 ppm et de l'aluminium en une teneur inférieure à 200 ppm.

**12.** - Métal déposé selon la revendication 11, **caractérisé en ce qu'**il contient, en outre :

 - > 90 % de Fe,
 - de 5 à 150 ppm de Al,
 - 0.01 à 0.12 % de C,
 - 0.7 à 2 % de Mn,
 - 0.15 à 0.9 % de Si, de préférence de 0.3 à 0.85% de Si, de préférence encore moins de 0.70% de Si,
 - de 10 à 300 ppm de Ti, de préférence plus de 20 ppm de Ti,
 - < 80 ppm de N,
 - 1 à 80 ppm de B et/ou
 - 0.02 à 0.08 % de O.

**13.** - Métal déposé selon l'une des revendications 11 ou 12, **caractérisé en ce qu'**il contient, en outre un ou plusieurs éléments d'alliage choisis parmi Ni, Cr et Mo.

**14.** - Pièce métallique comprenant un joint de soudure ou du métal déposé selon l'une des revendications 11 à 13.

Tension
(V)

ZONE DE TRANSFERT
GLOBULAIRE

ZONE DE TRANSFERT
PAR COURT CIRCUIT

ZONE DE TRANSFERT PAR
PULVÉRISATION AXIALE

150            250      Intensité
                          (A)

FIG.2

28

26

10

22

20

16          18

24

12

FIG.1

**Office européen
des brevets**

**RAPPORT DE RECHERCHE EUROPEENNE**

Numéro de la demande

EP 06 30 1003

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2004/140303 A1 (KATAOKA TOKIHIKO [JP] ET AL) 22 juillet 2004 (2004-07-22) * revendications 1,3,7 * | 1-3,5-14 | INV. B23K35/30 |
| P,X | WO 2005/120766 A (ZAKRYTOYE AKTSYONERNOYE OBSCHE [RU]; DUB VLADIMIR SEMYONOVICH [RU]; MA) 22 décembre 2005 (2005-12-22) * abrégé; tableau 1 * | 1-3,5,6, 10-14 | |
| X | GB 2 204 324 A (INST CHERNOI METALLURGII; INST ELEKTROSWARKI PATONA INST CHERNOI METAL) 9 novembre 1988 (1988-11-09) * le document en entier * | 1-3,5,6, 10-14 | |
| X | PATENT ABSTRACTS OF JAPAN vol. 015, no. 013 (M-1069), 11 janvier 1991 (1991-01-11) & JP 02 263593 A (NIPPON STEEL CORP), 26 octobre 1990 (1990-10-26) * abrégé * | 1-3,5-7, 10-14 | |

DOMAINES TECHNIQUES RECHERCHES (IPC)

B23K

Le présent rapport a été établi pour toutes les revendications

| Lieu de la recherche | Date d'achèvement de la recherche | Examinateur |
|---|---|---|
| Munich | 25 janvier 2007 | CAUBET, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 06 30 1003

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-01-2007

| Document brevet cité au rapport de recherche | | Date de publication | Membre(s) de la famille de brevet(s) | | Date de publication |
|---|---|---|---|---|---|
| US 2004140303 | A1 | 22-07-2004 | CN<br>WO<br>SE<br>SE | 1533315 A<br>03064103 A1<br>527388 C2<br>0302581 A | 29-09-2004<br>07-08-2003<br>21-02-2006<br>30-09-2003 |
| WO 2005120766 | A | 22-12-2005 | RU | 2253556 C1 | 10-06-2005 |
| GB 2204324 | A | 09-11-1988 | CH<br>DE<br>FR<br>US | 673005 A5<br>3717373 A1<br>2615772 A1<br>4843212 A | 31-01-1990<br>08-12-1988<br>02-12-1988<br>27-06-1989 |
| JP 02263593 | A | 26-10-1990 | JP | 2711130 B2 | 10-02-1998 |

EPO FORM P0460

Pour tout renseignement concernant cette annexe : voir Journal Officiel de l'Office européen des brevets, No.12/82